# EUROPÄISCHE PATENTSCHRIFT

(11) **EP 2 606 782 B1**
(45) Veröffentlichungstag und Bekanntmachung des Hinweises auf die Patenterteilung: **05.08.2015**
(21) Anmeldenummer: 12007461.2
(22) Anmeldetag: 31.10.2012
(51) Int. Cl.: A47J 31/44, A47J 31/46

(54) **Kaffee-/Espressomaschine mit einer Milchschaumerzeugungseinrichtung für Cappuccino**
Coffee/espresso machine with a milk foaming device for cappuccino
Machine à café/espresso dotée d´un dispositif de production de mousse de lait pour cappuccino

(30) Priorität: 22.12.2011 DE 202011109479 U
(43) Veröffentlichungstag der Anmeldung: 26.06.2013
(73) Patentinhaber: Eugster/Frismag AG, 8580 Amriswil (CH)
(72) Erfinder: Mahlich, Gotthard, 61476 Kronberg (DE); Schöb, Markus, 9240 Uzwil (CH)
(74) Vertreter: Schubert, Siegmar

(56) Entgegenhaltungen:
- EP-A1- 0 820 715
- EP-A1- 2 186 454
- DE-U1-202005 011 203
- DE-U1-202009 013 064

## Beschreibung

Die Erfindung betrifft eine Kaffee-/Espressomaschine mit einer Milchschaumerzeugungseinrichtung für Cappuccino nach dem Oberbegriff des Anspruchs 1.

Eine solche bekannte Kaffee-/Espressomaschine ist so ausgebildet, dass sie Milchschaum und Espresso auch zeitlich aufeinanderfolgend in eine Tasse oder zwei Tassen als Auffanggefäß(e) auf einer Aufstellfläche einleiten kann, ohne deren Umpositionierung zu erfordern, sowie leicht und gründlich gereinigt werden kann (DE 20 2009 013 064 U1, EP-A-2 301 396). Die Kaffee-/Espressomaschine weist hierzu einen Auslaufverteiler mit zwei Auslaufrohren auf, die von einem Verteilerrohr des Auslaufverteilers nach unten abgewinkelt und unten offen sind. Das Verteilerrohr des Auslaufverteilers ist mit einem mittigen Espressozulauf flüssigkeitsleitend verbunden. Von zwei Milchschaumleitungen, die voneinander getrennt an mindestens eine Milchschaumerzeugungseinrichtung angeschlossen sind, mündet jeweils eine in ein oberes Ende eines der beiden Auslaufrohre. Das Verteilerrohr ist zur Verteilerwirkung im Wesentlichen waagerecht angeordnet und kann allenfalls von dem mittigen Espressozulauf gegenüber der Horizontalen um einen spitzen Winkel geneigt nach unten zu den oberen Enden der Auslaufrohre verlaufen. Die Kaffee-/Espressomaschine wird vorteilhaft in Verbindung mit einer Steuerung der Espressobrüheinheit und der Milchschaumerzeugungseinrichtung betrieben, so dass selbsttätig zunächst Milchschaum und anschließend Espresso zur Cappuccinobereitung erzeugt wird und durch die Auslaufrohre fließt. Demzufolge werden die nach dem Milchschaumauslauf zunächst in den Auslaufrohren verbliebenen Milchschaumreste durch den nachfolgenden Espressodurchlauf weitgehend ausgespült, und es brauchen in einem nachfolgenden Spülvorgang mit Wasser praktisch nur noch die verbliebenen Espressoreste aus den Auslaufrohren gespült zu werden.

Im einzelnen offenbaren die obigen Dokumente eine Kaffee-/Espressomaschine mit einer Milchschaumerzeugungseinrichtung für Cappuccino sowie mit zwei Auslaufrohren, die mit einem Espressozulauf in flüssigkeitsleitender Verbindung stehen. Der Espressozulauf ist an einem Ausgang einer Espressobrüheinheit angeschlossen. Ein Auslaufverteiler weist die beiden Auslaufrohre auf und ist mit dem Espressozulauf flüssigkeitsleitend verbunden. Von Enden eines Verteilerrohrs des Auslaufverteilers sind die Auslaufrohre nach unten abgewinkelt angeordnet und unten offen. Die Milchschaumerzeugungseinrichtung, die eine Venturidüse, eine Misch- und Schäumkammer und eine auf diese in Durchflussrichtung folgende Düsenanordnung nach dem Laval-Prinzip mit einem Düsenhals umfasst, steht mit dem Auslaufverteiler in flüssigkeitsleitender Verbindung.

Bekannt ist auch ein Kaffeeautomat zur Ausgabe von Kaffee, Milch und/oder Milchschaum mit zumindest einem Kaffeezuführkanal und einem Milch-/Milchschaumzuführkanal mit zwei zueinander beabstandet angeordneten Kanalauslässen, deren gegenseitiger Abstand zum alternativen gemeinsamen Befüllen von zwei Getränkebehältern oder lediglich einem einzigen Getränkebehälter bemessen ist (EP-A-2 186 454). In diesem Kaffeeautomaten sind insbesondere zwei Kaffeezuführkanäle vorgesehen, die jeweils einem der beiden Kanalauslässe zugeordnet sind, sowie eine Kanalgabel mit zwei Teilkanälen, die den Milch-/Milchschaumzuführkanal mit den beiden Kanalauslässen kommunizierend verbindet. Die Teilkanäle der Kanalgabel sind oben offen ausgebildet und weisen insbesondere innen untere Längskanten an den Seitenflächen auf, wo diese auf die annähernd horizontale Sohle der Teilkanäle stoßen, die schwierig zu reinigen sind. Im Hinblick darauf ist die Kanalgabel mit den Teilkanälen zusammen mit den Kaffeezurührkanälen bevorzugt als aus dem Kaffeeautomaten entnehmbare Einheit ausgebildet, um diese zur händischen Reinigung oder mittels einer Spülmaschine abbauen zu können. Die Abnehmbarkeit der Einheit erhöht jedoch den konstruktiven Aufwand.

Um eine Kaffee-/Espressomaschine mit integrierter Milchschaumerzeugungseinrichtung möglichst konstruktiv zu vereinfachen und hinsichtlich ihrer Funktion, ihrer Bedienbarkeit und ihrer Reinigungsmöglichkeit zu verbessern, ist es bereits bekannt, den Kaffeeauslauf und einen Milchauslauf konstruktiv zu einer Auslasseinheit zusammenzufassen, in der der Kaffeeauslauf und der Milchauslauf koaxial zueinander angeordnet sind, so dass der Milchauslauf den Kaffeeauslauf umgibt (EP 0 820 715 B1). Insbesondere kann der Kaffeeauslauf unterhalb des Milchauslaus ausmünden. Damit soll die Sauberhaltung der Maschine vereinfacht werden, da durch die tiefer gelegte Ausmündung des Kaffeeauslaufs verhindert wird, dass dieser durch die Milchreste verklebt. Jedoch kann in dem Milchauslauf zurückbleibende Milch in diesem verkleben, insbesondere wenn sich in dem Milchauslauf Stege bis zu einer Wand des Kaffeeauslaufs erstrecken, um als Leitschaufeln einen Drall der Milch und somit ein Verspritzen der Milch bzw. des Milchschaums zu verringern oder zu verhindern. In einer Kaffee-/Espressomaschine mit Doppelauslauf können zwei jeweils koaxiale Anordnungen des Kaffeeauslaufs und des Milchauslaufs zusammengefasst sein und über einer Verteilkammer mit einem Espressozulauf verbunden sein, wogegen die aufgeschäumte Milch den beiden koaxialen Anordnungen getrennt zugeführt wird.

Wenn die obige Kaffee-/Espressomaschine wie sonst bevorzugt so betrieben wird, dass zur Cappuccinozubereitung zuerst Kaffee-/Espresso durch den Kaffeeauslauf ausläuft und anschließend Milchschaum durch den äußeren koaxialen Milchschaumauslauf, ist der Nachteil besonders groß, dass wenigstens ein Teil der in dem Milchschaumauslauf verbleibenden Milchreste bei dem anschließenden Kaffee-/Espressoauslassvorgang und dadurch Erhitzen des Kaffeeauslaufrohrs an dem Kaffeeauslaufrohr festbacken kann und bei einem Spülvorgang nur schwer zu entfernen ist.

Zum Stand der Technik gehört ferner ein Auslaufverteiler für Espressomaschinen (DE 20 2005 011 203 U1), mit einem gemeinsamen Kaffeeeinlauf und wenigstens zwei mit diesem strömungsmäßig in Verbindung stehenden Teilauslauföffnungen mit Strömungsberuhigungsmitteln. Zwei von dem gemeinsamen Kaffeeauslauf abgezweigte Teilauslaufleitungen weisen je einen offenen Endabschnitt auf, der in je eine Prallkammer mündet. Jede Prallkammer ist in jeweils einem Auslaufkörper ausgebildet, der Teilauslauföffnungen aufweist. Die Espressomaschine ist jedoch nicht mit einer Milchschaumerzeugungseinrichtung ausgestattet, die zu verteilenden Milchschaum erzeugen würde.

Die DE 10 2010 038 112 A1 offenbart eine Getränkezubereitungsmaschine, insbesondere zur Zubereitung von Kaffee, Espresso, Milchmischgetränken, mit einem Auslassgehäuseteil, mit dem ein abnehmbares Auslaufteil lösbar verbunden ist, welches einen ersten Auslauf für Kaffee und einen zweiten Auslauf für Milch und/oder Milchschaum umfasst. Zu dem ersten Auslauf führt eine erste Kammer für den Durchfluss von Kaffee und zu dem zweiten Auslauf führt eine zweite Kammer für den Durchfluss des aus einer Mischkammer abströmenden Milch- und/oder Milchschaumstromes.

Eine weitere bekannte Espressomaschine weist einen Auslaufverteiler nur für gebrühten Kaffee und aus diesem erzeugten Schaum, nicht aber Milchschaum, mit einer Schneide auf, die den Kaffee und Schaum auf zwei Ausläufe verteilt (DE 40 37 366 A1). Wenngleich in dieser Ausführungsform kein Milchschaum ansetzen kann, ist der Auslaufverteiler vorzugsweise zur Reinigung leicht abnehmbar mit einem Kaffeefilter verbunden, in den ein Düseneinsatz eingefügt ist. Dieser weist einen oberen zylindrischen Einlaufabschnitt und einen sich unten daran anschließenden Düsenabschnitt auf. Ein oberer Endabschnitt des Auslaufverteilers lässt einen Ringspalt mit Luftzuführnuten zu dem Düsenabschnitt frei. In dem Endabschnitt ist ein auf den obigen Düsenabschnitt folgendes Diffusorteil ausgeformt, an das sich nach unten ein zylindrischer Kanalabschnitt und ein zweites Düsenteil über der Schneide des Auslaufventils anschließen. In dem zylindrischen Kanalabschnitt ist ein Axialturbinenrad angeordnet. Während eines Kaffeedurchlaufs wird an dem Ringspalt Unterdruck erzeugt und Luft angesaugt, die mit dem Kaffee gemischt wird. Das durch ausströmenden Kaffee angetriebene Axialturbinenrad trägt zur Erzeugung kleinerer Luftblasen bei. Diese Anordnung nur für Kaffeeschaumerzeugung und -verteilung ist konstruktiv aufwendig.

Der vorliegenden Erfindung liegt die Aufgabe zugrunde, die (Vor-)Reinigung des Auslaufverteilers mit den beiden Auslaufrohren gemeinsam für Kaffee und Milchschaum in konstruktiv einfacher Weise weiter zu verbessern und insbesondere eine Abnehmbarkeit des Auslaufverteilers zur Reinigung entbehrlich zu machen.

Diese Aufgabe wird durch eine Kaffee-/Espressomaschine mit den Merkmalen des Anspruchs 1 gelöst.

Es wird von einer Kaffee-/Espressomaschine mit einer Milchschaumerzeugungseinrichtung ausgegangen, die eine Venturidüse in einem Strömungskanal zwischen einer Dampfzuleitung und einer Misch- und Schäumkammer und einer in Durchflussrichtung auf diese folgende Düsenanordnung umfasst, die nach dem Prinzip einer Lavaldüse funktioniert. Eine solche Düsenanordnung weist einen Kompressionsraum in Durchflussrichtung vor einem Düsenhals und an diesen anschließend eine Expansionszone auf, die durch einen Expansionsraum der Düsenanordnung gebildet sein kann.

Indem eine solche Düsenanordnung der Milchschaumerzeugungseinrichtung erfindungsgemäß direkt in einen mittigen Verbindungsabschnitt eines Verteilerrohrs eines Auslaufverteilers mündet, entfällt jedwede gesonderte Milchschaumzuführleitung zu dem Auslaufverteiler, der bereits zur Auslaufverteilung von Kaffee/Espresso vorgesehen ist. Der Herstellungsaufwand ist entsprechend gering. Betriebstechnisch entfällt nicht nur ein Reinigungserfordernis für sonst erforderliche Milch/Milchschaum führende Leitungen, sondern zumindest der aus Verteilerrohr und Auslaufrohren bestehende Auslaufverteiler kann mit Kaffee/Espresso, der insbesondere für Cappuccinobereitung in wenigstens ein Auffanggefäß bzw. eine Tasse nach Milchschaumeinleitung geleitet wird, wirksam gespült werden und im Bedarfsfall weiter mit Wasser gereinigt werden.

Außerdem ist eine Baugruppe mit einer solchen Anordnung des Auslaufverteilers besonders kompakt.

Zum wirksamen Spülen nicht nur des Auslaufverteilers, sondern auch zumindest teilweise der Düsenanordnung mündet der Espressozulauf für den mit dem Auslaufverteiler zu verteilenden Espresso in den Düsenhals der Düsenanordnung oder stromabwärts des Düsenhalses in einen Expansionsraum der Düsenanordnung, also in beiden Fällen in einen Bereich der Düsenanordnung, in dem der zugeführte Espresso beschleunigt wird.

Es ist statt dessen nach den Ansprüchen 4 und 6 möglich, den Espressozulauf getrennt von der Düsenanordnung in den Verbindungsabschnitt des Verteilerrohrs münden zu lassen, wodurch eine Spülung mit Espresso erst in dem Verbindungsabschnitt einsetzen kann.

Eine herstellungsgünstige kompakte Gestaltung der dem Auslaufverteiler vorgeschalteten Düsenanordnung der Milchschaumerzeugungseinrichtung wird gemäß Anspruch 2 dadurch erzielt, dass der Düsenhals der Düsenanordnung hohlzylindrisch bis zu dem Verbindungsabschnitt des Verteilerrohrs verlängert ist. Dabei dienen düsennahe Abschnitte des Verteilerrohrs einschließlich des Verbindungsabschnitts als Expansionszonen.

Als Verbindungsabschnitt des Verteilerrohrs wird dessen rohrförmiger Abschnitt angesehen, der die seitliche Mündung der Düsenanordnung begrenzt.

Bei dieser Ausbildung des Düsenhalses nach Anspruch 2 mündet in diesen quer ein Espressozulauf, der einfach in Form einer Bohrung ausgeführt sein kann. Auch der verlängerte Düsenhals ist zweckmäßig als Bohrung realisiert.

Für die Ausbildung der vorgenannten Expansionszonen in dem Verteilerrohr ist nach Anspruch 3 die lichte Querschnittsfläche des Verteilerrohrs zumindest an dessen Verbindungsabschnitt größer als diejenige des zu dem Verbindungsabschnitt verlängerten Düsenhalses.

In einer Variante der Kaffee-/Espressomaschine nach Anspruch 4 erstreckt sich eine sich an den Düsenhals in Durchflussrichtung anschließender und in seiner Querschnittsfläche erweiternder Expansionsraum der Düsenanordnung bis in den Verbindungsabschnitt des Verteilerrohrs. In dieser Variante kann der Expansionsraum praktisch unabhängig von der Ausbildung des Verteilerrohrs optimiert werden.

Bevorzugt bei letzterer Variante kann nach Anspruch 5 eine Kaffeezulaufleitung sich bis in den Düsenhals erstrecken und in diesem als Schlitzdüse ausgebildet sein. Der gegenüber dem inneren Querschnitt der Espressozulaufleitung engere Schlitz der Schlitzdüse befindet sich auf der dem Expansionsraum der Düsenanordnung zugewandten Seite der Espressozulaufleitung und verläuft quer zur Durchflussrichtung des Milch-/Luftgemischs bzw. Milchschaums durch den Düsenhals. Durch die Anordnung der Schlitzdüse in dem Düsenhals wirkt der Expansionsraum der Milchschäumvorrichtung zugleich als Expansionszone der Schlitzdüse, wobei die Expansionszone noch weiter düsennahe Abschnitte einschließlich des Verbindungsabschnitts des Verteilerrohrs umfassen kann. Vorteilhaft bei dieser Anordnung ist, dass der der Schlitzdüse zugeführte Kaffeesud in der Schlitzdüse komprimiert wird und nachfolgend entspannt wird, was zu einer weiter verbesserten Cremabildung führt.

Drei Ausführungsformen einer Baueinheit einer Milchschaumerzeugungseinrichtung für Cappuccino mit einem zwei Auslaufrohre umfassenden Auslaufverteiler für eine Kaffee-/Espressomaschine werden nachfolgend anhand einer Zeichnung mit drei Figuren beschrieben, aus denen sich weitere vorteilhafte Merkmale der Erfindung ergeben können. Es zeigen:
- Fig. 1: eine erste Ausführungsform einer Baueinheit einer Milchschaumerzeugungseinrichtung, die direkt in einen Auslaufverteiler mündet, in einem Längsschnitt,
- Fig. 1a: einen Ausschnitt aus der Milchschaumerzeugungseinrichtung nach Figur 1 in einer Schnittebene A-A in gegenüber Figur 1 größerer Darstellung,
- Fig. 1b: als Einzelheit der ersten Ausführungsform aus den Figuren 1 und 1a, einen als Schlitzdüse ausgebildeten Espressozulauf in einem Querschnitt in der Schnittebene B-B in Figur 1 a,
- Fig. 2: eine zweite Ausführungsform einer direkt in einen Auslaufverteiler mündenden Milchschaumerzeugungseinrichtung in einem Längsschnitt und
- Fig. 3: eine dritte Ausführungsform einer direkt in einen Auslaufverteiler mündenden Milchschaumerzeugungseinrichtung in einem Längsschnitt.

In den Figuren sind gleiche Teile mit übereinstimmenden Bezugszeichen versehen.

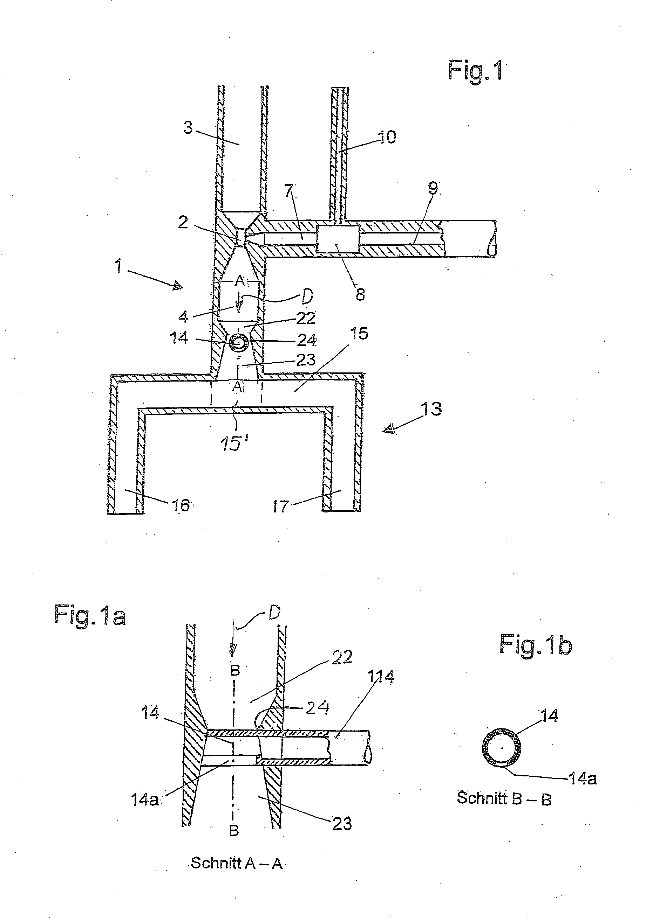

In Figur 1 ist mit 1 eine Milchschaumerzeugungseinrichtung mit einer Venturidüse 2 bezeichnet, die in einem Strömungskanal zwischen einer Dampfzuleitung 3 und einer Misch- und Schäumkammer 4 angeordnet ist. Zu der Venturidüse 2 führt eine Milchluftgemischleitung 7, die mit einer Milchluftvormischkammer 8 verbunden ist. Die Milchluftvormischkammer 8 steht einerseits mit einer Milchzulaufleitung 9 und andererseits mit einer Luftleitung 10 in Verbindung, die durch ein nicht dargestelltes Luftventil verschlossen werden kann, um im Bedarfsfall der Venturidüse 2 kein Milchluftvorgemisch, sondern nur Milch zuzuführen.

Die grundlegende Funktion der Milchschaumerzeugungseinrichtung besteht darin, dass durch Dampf, der in die Dampfzuleitung 3 einströmt, in die Venturidüse 2 Milchluftgemisch oder aber bei geschlossener Luftleitung 10 Milch angesaugt wird und in der Schäumkammer zu Milchschaum bzw. erhitzter Milch aufbereitet wird.

Die Milchschaumerzeugungseinrichtung 1 umfasst auf die Misch- und Schäumkammer in Durchflussrichtung D folgend eine Düsenanordnung 22 nach dem Laval-Prinzip, die einen sich in Durchflussrichtung D an die Misch- und Schäumkammer anschließende, nicht bezeichneten Kompressionsraum vor und einen Expansionsraum 23 nach einem Düsenhals 24 aufweist. Der Kompressionsraum und der Expansionsraum 23 sind, wie in Figur 1 dargestellt, durch annähernd konische Düsenabschnitte realisiert, zwischen denen sich der ringförmige Düsenhals 24 befindet. Der Expansionsraum 23 ist hiermit Bestandteil der Milchschaumerzeugungseinrichtung 1.

Ein Auslaufverteiler 13 der Baueinheit dieser Milchschaumerzeugungseinrichtung 1 umfasst ein im Wesentlichen mittig angeordnetes Verteilerrohr 15, an dessen beiden Enden je ein Auslaufrohr 16 bzw. 17 vertikal nach unten abgewinkelt angeordnet ist und über einer nicht dargestellten gemeinsamen Abstellfläche für Tassen und dergleichen Auffanggefäße unten offen ist.

Wie aus Figur 1 ersichtlich, mündet der Expansionsraum 23 der Düsenanordnung 22 direkt in das Verteilerrohr 15 des Auslaufverteilers 13, und zwar in dessen rohrförmigen Verbindungsabschnitt 15a, der die Öffnung des Expansionsraums 23 in das Verteilerrohr 15 unmittelbar einschließt, wie in Figur 1 angedeutet.

Düsennahe Abschnitte des Verteilerrohrs 15, insbesondere der Verbindungsabschnitt 15a, können dabei noch die Expansionswirkung des Expansionsraums 23 ergänzen.

Aus den Figuren 1 und 1a ist ersichtlich, dass sich eine Espressozulaufleitung 114 als Espressozulauf 14 in die Düsenanordnung 22 erstreckt, und zwar zu Beginn des Expansionsraums 23 in Durchflussrichtung D im Anschluss an den Düsenhals 24. In einer ähnlichen Ausführungsform könnte die Espressozulaufleitung auch in den Düsenhals mit im Wesentlichen gleicher Wirkung geführt sein. Die Espressozulaufleitung 114 ist in der Düsenanordnung 22 auf der dem Expansionsraum 23 zugewandten Seite mit einem Längsschlitz versehen, der eine Schlitzdüse als Espressozulauf 14a bildet, weil der Schlitz enger als der innere Querschnitt der Espressozulaufleitung ist. Eine Expansionszone der Schlitzdüse geht in dem Expansionsraum 23 der Milchschaumerzeugungseinrichtung über. Durch die Schlitzdüse wird der Kaffeesud in der Espressozulaufleitung 114 zunächst komprimiert, bevor er nach Austritt aus der Schlitzdüse entspannt wird, was eine besonders gute Crema bildet.

Der Kaffeesud strömt dann, wie vorzugsweise vorangehend, der Milchschaum, aus dem Expansionsraum 23 der Milchschaumerzeugungseinrichtung 1 direkt in den Verbindungsabschnitt 15a des Verbindungsrohrs 15 des Auslaufverteilers 13, in dem er gleichmäßig in die beiden Auslaufrohre 16, 17 verteilt wird. Aus jedem der beiden Auslaufrohre 16, 17 fließt also ein gleichmäßig aufgeteilter Anteil Milchschaum und Espresso in jeweils ein Auffanggefäß oder ein geeignet aufgestelltes gemeinsames Auffanggefäß.

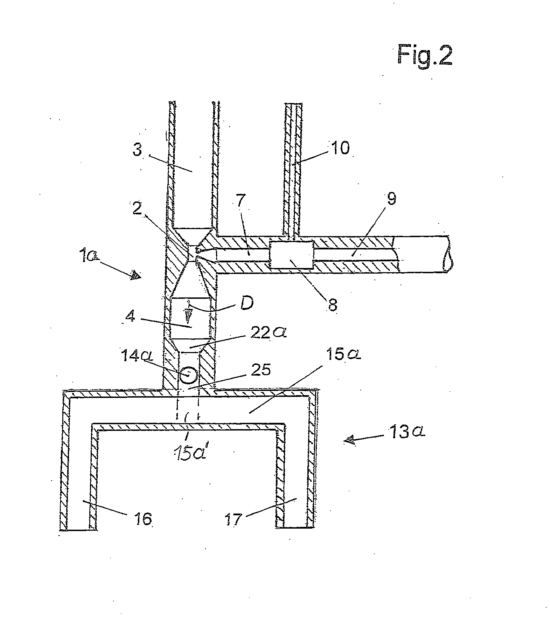

Die Milchschaumerzeugungseinrichtung 1a der zweiten Ausführungsform unterscheidet sich von der Milchschaumerzeugungseinrichtung 1 der ersten Ausführungsform durch die Ausbildung des Düsenhalses 25 der Düsenanordnung 22a nach dem Laval-Prinzip in Figur 2. Der verlängerte Düsenhals 25 ist hohlzylindrisch ausgebildet und erstreckt sich in Durchflussrichtung D direkt bis in das Verteilerrohr 15a des Auslaufverteilers 13a, und zwar in dessen Verbindungsabschnitt 15a'. Bei dieser zweiten Ausführungsform wirken düsennahe Abschnitte des Verteilerrohrs 15a, insbesondere dessen Verbindungsabschnitt 15a', als Expansionszone.

In den verlängerten Düsenhals 25 der Düsenanordnung 22a erstreckt sich ein einfacher Espressozulauf 14a in Form einer Bohrung, so dass der austretende Espresso in dem verlängerten Düsenhals 25 und der anschließenden Expansionszone in dem Verteilerrohr 15a, insbesondere dem Verbindungsabschnitt 15a', beschleunigt wird und die sich an den Espressozulauf 14a in Durchflussrichtung D anschließenden Abschnitte des Düsenhalses 25 und des Auslaufverteilers 15 wirksam spülen kann.

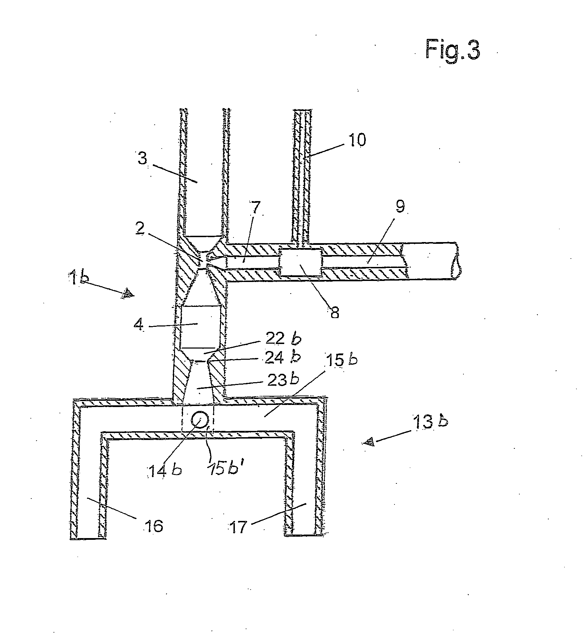

Die dritte Ausführungsform der Milchschaumerzeugungseinrichtung 1b und des Auslaufverteilers 13b in Figur 3 entspricht der ersten Ausführungsform gemäß Figur 1, mit Ausnahme der Anordnung des Espressozulaufs 14b, der hier in den Verbindungsabschnitt 15b' des Verteilerrohrs 15b mündet. Der Expansionsraum 23b der Düsenanordnung 22b nach dem Laval-Prinzip erstreckt sich also auch hier direkt bis in den Verbindungsabschnitt 15b' des Verteilerrohrs 15b.

Somit können in der dritten Ausführungsform das Verteilerrohr 15b, das auch zur Leitung von Milchschaum dient, anschließend zusammen mit den Auslaufrohren 16 und 17 durch Kaffee/Espresso gespült werden.

### Bezugszahlenliste

- 1: Milchschaumerzeugungseinrichtung
- 1a: Milchschaumerzeugungseinrichtung
- 1b: Milchschaumerzeugungseinrichtung
- 2: Venturidüse
- 3: Dampfzuleitung
- 4: Misch- und Schäumkammer
- 7: Milchluftgemischleitung
- 8: Milchluftvormischkammer
- 9: Milchzulaufleitung
- 10: Luftleitung
- 13: Auslaufverteiler
- 14: Espressozulauf
- 14a: Espressozulauf (Schlitzdüse)
- 14b: Espressozulauf
- 15: Verteilerrohr
- 15': Verbindungsabschnitt
- 15a: Espresso-Milchschaumverteilerrohr
- 15a': Verbindungsabschnitt
- 15b: Verteilerrohr
- 15b': Verbindungsabschnitt
- 16: Auslaufrohr
- 17: Auslaufrohr
- 22: (Laval-)Düsenanordnung
- 22a: (Laval-)Düsenanordnung
- 22b: (Laval-)Düsenanordnung
- 23: Expansionsraum
- 23b: Expansionsraum
- 24: Düsenhals
- 24b: Düsenhals
- 25: verlängerter Düsenhals
- 114: Espressozulaufleitung

## Patentansprüche

1. Kaffee-/Espressomaschine mit einer Milchschaumerzeugungseinrichtung (1, 1a, 1b) für Cappuccino sowie mit zwei Auslaufrohren (16, 17), die mit einem Espressozulauf (14, 14a, 14b) in flüssigkeitsleitender Verbindung stehen,
wobei der Espressozulauf (14, 14a, 14b) an einem Ausgang einer Espressobrüheinheit angeschlossen ist,
wobei ein Auslaufverteiler (13, 13a, 13b) die zwei Auflaufrohre (16, 17) aufweist und mit dem Espressozulauf (14, 14a, 14b) flüssigkeitsleitend verbunden ist,
wobei von Enden eines Verteilerrohrs (15, 15a, 15b) des Auslaufverteilers (13, 13a, 13b) die Auslaufrohre (16, 17) nach unten abgewinkelt angeordnet sind und unten offen sind, und
wobei die Milchschaumerzeugungseinrichtung (1, 1 a, 1b), die eine Venturidüse (2), eine Misch- und Schäumkammer (4) und eine auf diese in Durchflussrichtung folgende Düsenanordnung (22, 22a, 22b) nach dem Laval-Prinzip mit einem Düsenhals umfasst, mit dem Auslaufverteiler (13, 13a, 13b) in flüssigkeitsleitender Verbindung steht, und
wobei die Düsenanordnung (22, 22a, 22b) der Milchschaumerzeugungseinrichtung (1, 1a, 1b) direkt in einen mittigen Verbindungsabschnitt (15', 15a', 15b') des Verteilerrohrs (15, 15a, 15b) mündet unddass der Espressozulauf (14, 14a, 14b) in den Düsenhals (24, 24b, 25) der Düsenanordnung (22, 22a, 22b) oder stromabwärts des Düsenhalses (24, 24b, 25) in eine Expansionszone (23, 23b) der Düsenanordnung (22, 22a, 22b) mündet.

2. Kaffee-/Espressomaschine nach Anspruch 1,
**dadurch gekennzeichnet,**
**dass** der Düsenhals (25) der Düsenanordnung (22a) hohlzylindrisch verlängert ist, so dass er sich bis in den Verbindungsabschnitt (15a') des Verteilerrohrs (15a) erstreckt.

3. Kaffee-/Espressomaschine nach Anspruch 2,
**dadurch gekennzeichnet,**
**dass** die lichte Querschnittsfläche des Verteilerrohrs (15a) zumindest an dem Verbindungsabschnitt (15a') größer als diejenige des verlängerten Düsenhalses (25) ist.

4. Kaffee-/Espressomaschine nach Anspruch 1 oder 2,
**dadurch gekennzeichnet,**
**dass** sich ein an den Düsenhals (24, 24b) in Durchflussrichtung (D) anschließender und im Verlauf der Durchflussrichtung (D) in seiner Querschnittsfläche erweiternder Expansionsraum (23, 23b) in der Düsenanordnung (13, 13b) bis in den Verbindungsabschnitt (15', 15b') des Verteilerrohrs (15, 15b) erstreckt.

5. Kaffee-/Espressomaschine nach Anspruch 4,
**dadurch gekennzeichnet,**
**dass** eine sich bis in den Düsenhals (24) erstreckende Espressozulaufleitung (114) als Schlitzdüse ausgebildet ist.

6. Kaffee-/Espressomaschine nach Anspruch 4,
**dadurch gekennzeichnet,**
**dass** der Espressozulauf (14b) in den Verbindungsabschnitt (15b') des Verteilerrohrs (15b) mündet.

## Claims

1. Coffee/espresso machine having a milk foaming device (1, 1 a, 1 b) for cappuccino and having two outlet pipes (16, 17) which are in fluidic connection with an espresso feed (14, 14a, 14b),
wherein the espresso feed (14, 14a, 14b) is connected to an outlet of an espresso brewing unit,
wherein an outlet distributor (13, 13a, 13b) has the two outlet pipes (16, 17) and is in fluidic connection with the espresso feed (14, 14a, 14b),
wherein, from ends of a distributor pipe (15, 15a, 15b) of the outlet distributor (13, 13a, 13b), the outlet pipes (16, 17) are arranged angled downwards and are open at the bottom, and
wherein the milk foaming device (1, 1a, 1b) which comprises a Venturi nozzle (2), a mixing and foaming chamber (4) and a nozzle arrangement (22, 22a, 22b) using the Laval principle with a nozzle throat on said chamber downstream in the direction of flow, is in fluidic connection with the outlet distributor (13, 13a, 13b), and
wherein the nozzle arrangement (22, 22a, 22b) of the milk foaming device (1, 1a, 1b) flows directly into a central connection portion (15', 15a', 15b') of the distributor pipe (15, 15a, 15b), and
wherein the espresso feed (14, 14a, 14b) flows into the nozzle throat (24, 24b, 25) of the nozzle arrangement (22, 22a, 22b) or downstream of the nozzle throat (24, 24b, 25) into an expansion zone (23, 23b) of the nozzle arrangement (22, 22a, 22b).

2. Coffee/espresso machine according to claim 1,
**characterised in that** the nozzle throat (25) of the nozzle arrangement (22a) is extended as a hollow cylinder such that it extends up to the connection portion (15a') of the distributor pipe (15a).

3. Coffee/espresso machine according to claim 2,
**characterised in that** the interior cross sectional surface of the distributor pipe (15a) at least on the connection portion (15a') is greater than that of the extended nozzle throat (25).

4. Coffee/espresso machine according to either claim 1 or claim 2,
**characterised in that** an expansion chamber (23, 23b) which is connected to the nozzle throat (24, 24b) in the direction of flow (D) and which widens in its cross sectional surface in the course of the direction of flow extends in the nozzle arrangement (13, 13b) up to the connection portion (15', 15b') of the distributor pipe (15, 15b).

5. Coffee/espresso machine according to claim 4,
**characterised in that** an espresso feed line (114) which extends up to the nozzle throat (24) is constructed as a slotted nozzle.

6. Coffee/espresso machine according to claim 4,
**characterised in that** the espresso feed (14b) flows into the connection portion (15b') of the distributor pipe (15b).

## Revendications

1. Machine à café/espresso dotée d'un dispositif de production de mousse de lait (1, 1a, 1b) pour du cappuccino, ainsi que de deux tubes de sortie (16, 17) qui sont en communication par voie fluide avec une arrivée d'espresso (14, 14a, 14b),
dans laquelle l'arrivée d'espresso (14, 14a, 14b) est raccordée à une unité d'infusion d'espresso au niveau d'une sortie,
dans laquelle un distributeur de sortie (13, 13a, 13b) présente les deux tubes de sortie (16, 17) et est en communication par voie fluide avec l'arrivée d'espresso (14, 14a, 14b),
dans laquelle parmi des extrémités d'un tube de distribution (15, 15a, 15b) du distributeur de sortie (13, 13a, 13b), les tubes de sortie (16, 17) sont disposées coudées vers le bas et ouverts en bas, et
dans laquelle le dispositif de production de mousse de lait (1, 1a, 1b), qui comprend un gicleur à venturi (2), une chambre pour le lait et la mousse (4) et, après ces derniers, dans le sens de l'écoulement, un agencement de buses (22, 22a, 22b) selon le principe de Laval avec un collier de buse, est en communication par voie fluide avec le distributeur de sortie (13,13a, 13b), et dans laquelle l'agencement de buses (22, 22a, 22b) de le dispositif de production de mousse de lait (1, 1a, 1b) débouche directement dans une partie de liaison (15', 15'a, 15'b) centrale du tube distributeur ('15, 15a, 15b) et l'arrivée d'espresso (14, 14a, 14b) débouche dans le collier de buse (24, 24b, 25) de l'agencement de buses (22, 22a, 22b) ou en aval du collier de buse (24, 24b, 25) dans une zone d'expansion (23, 23b) de l'agencement de buses (22, 22a, 22b).

2. Machine à café/espresso selon la revendication 1,
caractérisée en ce
le collier de buse (25) de l'agencement de buses (22a) est prolongé en un cylindre creux de sorte qu'il s'étend jusque dans la partie de liaison (15'a) du tube distributeur (15a).

3. Machine à café/espresso selon la revendication 1,
**caractérisée en ce**
**que** la surface de la section transversale intérieure du tube de distribution (15a) est supérieure à celle du collier de buse (25) rallongé, du moins sur la partie de liaison (15'a).

4. Machine à café/espresso selon les revendications 1 ou 2,
**caractérisée en ce**
**qu'**une chambre d'expansion (23, 23b) faisant suite au collier de buse (24, 24b) dans le sens de l'écoulement et s'élargissant dans la surface de sa section transversale au cours de la direction d'écoulement (D) s'étend dans l'agencement de buses (13, 13b) jusqu'à la partie de liaison (15', 15'b) du tube de distribution (15, 15b).

5. Machine à café/espresso selon la revendication 4,
**caractérisée en ce**
**qu'**un tube d'arrivée d'espresso (114) s'étendant jusque dans le collier de buse (24) est conçu sous la forme d'une buse à fente.

6. Machine à café/espresso selon la revendication 4,
**caractérisée en ce**
**que** l'arrivée d'espresso (14b) débouche dans la partie de liaison (15'b) du tube de distribution (15b).
